# EUROPEAN PATENT APPLICATION

(11) **EP 4 607 685 A1**
(43) Date of publication of application: **27.08.2025**
(21) Application number: 22968290.1
(22) Date of filing: 16.12.2022
(51) Int. Cl.: H01M 50/543, H01M 50/552

(54) **BATTERY CELL, BATTERY, ELECTRIC DEVICE, AND MANUFACTURING METHOD FOR BATTERY CELL**

(71) Applicant: Contemporary Amperex Technology Co., Limited, Ningde, Fujian 352100 (CN)
(72) Inventor: LIN, Chuandong, Ningde, Fujian 352100 (CN); LIN, Jiang, Ningde, Fujian 352100 (CN); OU, Fuming, Ningde, Fujian 352100 (CN); WANG, Weiwei, Ningde, Fujian 352100 (CN); XUE, Fei, Ningde, Fujian 352100 (CN); GONG, Youlai, Ningde, Fujian 352100 (CN); WANG, Jianlei, Ningde, Fujian 352100 (CN)
(74) Representative: Ran, Handong
(86) International application number: PCT/CN2022/139795
(87) International publication number: WO 2024/124586

(57) **Abstract**

The embodiments of the present application belong to the technical field of batteries. Provided are a battery cell, a battery, an electric device, and a manufacturing method for a battery cell. The battery cell comprises: an electrode assembly and an electrode lead-out member, wherein the electrode assembly comprises a body and a tab; the electrode lead-out member is configured to conduct electric energy of the electrode assembly and comprises a first part; and the tab comprises a first connecting section and a second connecting section, which are sequentially connected, the first connecting section being connected to the body, the second connecting section being bent relative to the first connecting section, and at least one of the first connecting section and the second connecting section being connected to the first part. The assembly efficiency of the battery cell is relatively high.

## Description

### TECHNICAL FIELD

This application relates to the technical field of batteries, in particular to a battery cell, a battery, an electric device, and a manufacturing method of battery cell.

### BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

In the process of battery manufacturing, the assembly efficiency of batteries is an issue that cannot be ignored. Therefore, how the assembly efficiency of batteries is improved is an urgent technical problem that needs to be solved in battery technology.

### SUMMARY

An objective of this application is to provide a battery cell, a battery, an electric device, and a manufacturing method of battery cell. The battery cell has high assembly efficiency.

This application is implemented using the following technical solutions.

According to a first aspect, this application provides a battery cell, where the battery cell includes an electrode assembly and an electrode lead-out member. The electrode assembly includes a body and a tab. The electrode lead-out member is configured to lead out electric energy of the electrode assembly, and the electrode lead-out member includes a first portion. The tab includes a first connecting segment and a second connecting segment that are connected in sequence, the first connecting segment is connected to the body, the second connecting segment is bent with respect to the first connecting segment, and at least one of the first connecting segment and the second connecting segment is connected to the first portion.

According to the battery cell of the embodiments of this application, the second connecting segment is bent with respect to the first connecting segment, which can reduce the risk of interference between the tab and other components, improve the assembly efficiency, and reduce the risk of short circuit caused by contact between the positive and negative electrodes of the battery cell 20, such that the battery cell has relatively high reliability.

According to some embodiments of this application, the first connecting segment is connected to the first portion, and the second connecting segment is located on a side of the first connecting segment facing away from the first portion.

In the foregoing solution, the second connecting segment is located on the side of the first connecting segment facing away from the first portion, such that space on the side of the first connecting segment facing away from the first portion can be reasonably utilized, so as to facilitate the assembly of the electrode lead-out member and other components.

According to some embodiments of this application, the second connecting segment is constrained to a side of the first connecting segment facing away from the first portion.

In the foregoing solution, the second connecting segment is constrained to the side of the first connecting segment facing away from the first portion, which reduces the risk of interference between the second connecting segment and other components caused by the movement of the second connecting segment, thereby reducing the influence of the second connecting segment on the assembly of the battery cell.

According to some embodiments of this application, the second connecting segment is connected to the first connecting segment.

In the foregoing solution, the second connecting segment is connected to the first connecting segment, with no need to add an additional component to constrain the first connecting segment, which reduces costs. This can not only constrain the second connecting segment, but also make the tab and the electrode lead-out member have a higher current flow capability.

According to some embodiments of this application, both the first connecting segment and the second connecting segment are electrically connected to the first portion.

In the foregoing solution, both the first connecting segment and the second connecting segment are connected to the first portion, such that the tab and the electrode lead-out member have a higher current flow capability.

According to some embodiments of this application, the first connecting segment and the second connecting segment are stacked.

In the foregoing solution, the first connecting segment and the second connecting segment are stacked, such that the assembly space is reasonably utilized and the space occupation is reduced.

According to some embodiments of this application, the tab includes a plurality of sub-tabs stacked, where the plurality of sub-tabs are connected to form a first connecting portion, and the first connecting portion is located in the first connecting segment.

In the foregoing solution, the plurality of sub-tabs are connected to form the first connecting portion, which is conducive to the bending of the second connecting segment, and also conducive to reducing the damage of the tab in the welding process of the tab and the electrode lead-out member and improving the current flow capability of the tab.

According to some embodiments of this application, the tab includes an overlapping region in which the plurality of sub-tabs overlap with each other and a staggered region in which ends of the plurality of sub-tabs are staggered, where the staggered region is connected to the body through the overlapping region, with one part of the first connecting portion located in the overlapping region, and the other part of the first connecting portion located in the staggered region.

In the foregoing solution, one part of the first connecting portion is located in the overlapping region, and the other part of the first connecting portion is located in the staggered region, which enables the joint between the tab and the electrode lead-out member to have a relatively large current flow capability, and enables the tab to have a shorter size along its extension direction, saving materials and manufacturing costs.

According to some embodiments of this application, the first connecting portion includes a first end connected to the body and a second end connected to the second connecting segment, where along a direction from the first end to the second end, a size of the first connecting portion is L and a size of the part of the first connecting portion located in the staggered region is L1, satisfying 0.2L≤L1≤0.5L.

In the foregoing solution, the size of the part of the first connecting portion located in the staggered region satisfies the foregoing range, which can not only enable the joint between the tab and the electrode lead-out member to have a relatively large current flow capability, but also enable the tab to have a shorter size along its extension direction. If L1 is less than 0.2L, the tab has a relatively long size along its extension direction, which leads to wastes in materials; and if L1 is greater than 0.5L, the part of the first connecting portion in the staggered region has a relatively large size, which affects the current flow capability of the joint between the tab and the electrode lead-out member.

According to some embodiments of this application, the first portion has a first surface connected to the first connecting segment; the second connecting segment, the first connecting segment, and the electrode lead-out member are connected to form a second connecting portion; and along a direction perpendicular to the first surface, a projection of the second connecting portion at least partially overlaps with a projection of the first connecting portion.

In the foregoing solution, the projection of the second connecting portion at least partially overlaps with the projection of the first connecting portion, which facilitates the connection of the second connecting segment, the first connecting segment, and the electrode lead-out member, reduces the risk of breakage at a sub-tab, and enables the joint between the tab and the electrode lead-out member to have a relatively high current flow capability.

According to some embodiments of this application, along the direction perpendicular to the first surface, the projection of the second connecting portion falls into the projection of the first connecting portion.

In the foregoing solution, the projection of the second connecting portion falls into the projection of the first connecting portion, which can effectively reduce the risk of cracks or fractures caused by direct welding of multiple layers of sub-tabs.

According to some embodiments of this application, the first connecting portion includes the first end connected to the body and the second end connected to the second connecting segment, where along the direction from the first end to the second end, the size of the first connecting portion is L, the size of the part of the first connecting portion located in the staggered region is L1, and a size of the second connecting portion is L3, satisfying L1<L3<L.

In the foregoing solution, the size of the second connecting portion satisfies the foregoing range, and the second connecting portion and the first connecting portion have a relatively large overlapping area, which facilitates the connection of the second connecting segment, the first connecting segment, and the electrode lead-out member, and reduces the damage to the sub-tab during welding of the second connecting segment, the first connecting segment, and the electrode lead-out member.

According to some embodiments of this application, the first connecting portion includes the first end connected to the body and the second end connected to the second connecting segment, where along the direction from the first end to the second end, the midpoint of the second connecting portion coincides with the midpoint of the first connecting portion.

In the foregoing solution, the midpoint of the second connecting portion coincides with the midpoint of the first connecting portion, which facilitates the connection of the second connecting segment, the first connecting segment, and the electrode lead-out member.

According to some embodiments of this application, along the direction perpendicular to the first surface, a projection of the second connecting segment covers the projection of the first connecting portion.

In the foregoing solution, the projection of the second connecting segment covers the projection of the first connecting portion, which facilitates the connection between the second connecting segment and the first connecting segment.

According to some embodiments of this application, along a direction from one end of the second connecting segment connected to the first connecting segment to a free end of the second connecting segment, the second connecting segment exceeds beyond the second connecting portion.

In the foregoing solution, the second connecting segment exceeds beyond the second connecting portion, which can better fix the second connecting segment.

According to some embodiments of this application, the first connecting portion and/or the second connecting portion is formed through ultrasonic welding.

In the foregoing solution, the first connecting portion and/or the second connecting portion is formed through ultrasonic welding, such that the respective connecting portions are firmly connected.

According to some embodiments of this application, the battery cell further includes an electrode terminal, and the electrode lead-out member is an adapter connecting the tab and the electrode terminal, or the electrode lead-out member is the electrode terminal.

In the foregoing solution, the electrode lead-out member being an adapter connecting the tab and the electrode terminal is convenient to transfer the electric energy of the electrode assembly to the electrode terminal; and the electrode lead-out member being the electrode terminal has a simple structure, which is convenient to lead out the electric energy of the electrode assembly.

According to some embodiments of this application, the electrode assembly is a laminated structure.

In the foregoing solution, when the electrode plate is detected in the lamination process, if one or more electrode plates are defective, they can be rejected and scrapped with low scrapping cost.

According to some embodiments of this application, the tab includes a plurality of sub-tabs stacked, where heights of the plurality of sub-tabs are equal.

In the foregoing solution, the height of the sub-tab is a size of a portion of the sub-tab protruding from the body along the extension direction of the tab, and the heights of the plurality of sub-tabs are equal, which is convenient for processing and manufacturing.

According to some embodiments of this application, the tab extends from a first end face of the body, where the first end face faces the first portion; and the tab further includes a root segment, where the root segment connects the first connecting segment and the body, and the first connecting segment is bent with respect to the root segment.

In the foregoing solution, the first connecting segment is connected to the body through the root segment, and the first connecting segment is bent with respect to the root segment, which can reasonably utilize the assembly space and increase the energy density of the battery cell.

According to some embodiments of this application, the electrode assembly includes a first electrode assembly and a second electrode assembly, where the first electrode assembly and the second electrode assembly each are provided with the tab, the tab of the first electrode assembly and the tab of the second electrode assembly are connected to one electrode lead-out member, and the second connecting segment of the tab of the first electrode assembly and the second connecting segment of the tab of the second electrode assembly extend in opposite directions.

In the foregoing solution, the tab of the first electrode assembly and the tab of the second electrode assembly are connected to one electrode lead-out member, which is convenient to realize the current transfer of the battery cell; the second connecting segment of the tab of the first electrode assembly and the second connecting segment of the tab of the second electrode assembly extend in opposite directions, which reduces the risk of interference between the tab of the first electrode assembly and the tab of the second electrode assembly.

According to a second aspect, an embodiment of this application provides a battery including the battery cell according to any one of the foregoing embodiments.

According to a third aspect, an embodiment of this application provides an electric device including the battery cell according to any one of the foregoing embodiments or the battery according to any one of the foregoing embodiments, where the battery cell or battery is configured to supply electric energy.

According to a fourth aspect, an embodiment of this application provides a manufacturing method of battery cell, where the method includes the following steps: compressing a plurality of sub-tabs stacked of an electrode assembly to form a tab, where the tabs includes a first connecting segment and a second connecting segment that are connected in sequence, and the first connecting segment is connected to a body of the electrode assembly; bending the second connecting segment with respect to the first connecting segment; and connecting at least one of the second connecting segment and the first connecting segment to a first portion of an electrode lead-out member.

According to the manufacturing method of battery cell, the second connecting segment is bent with respect to the first connecting segment, which can reduce the risk of interference between the tab and other components, facilitate the assembly of the battery cell, improve the assembly efficiency, and reduce the risk of short circuit caused by contact between the positive and negative electrodes of the battery cell. The battery cell manufactured by the manufacturing method has relatively high reliability.

According to some embodiments of this application, the compressing a plurality of sub-tabs stacked of an electrode assembly includes: connecting the plurality of sub-tabs to form a first connecting portion; and the bending the second connecting segment with respect to the first connecting segment includes: bending the tab at an end of the first connecting portion far away from the body to form the second connecting segment.

In the foregoing solution, the plurality of sub-tabs are connected to form the first connecting portion, such that the plurality of sub-tabs has a compact structure, which helps to gather the electric energy of the plurality of sub-tabs; and the tab is bent at the end of the first connecting portion far away from the body, which helps to bend the tab.

According to some embodiments of this application, the connecting at least one of the second connecting segment and the first connecting segment to a first portion of an electrode lead-out member includes: connecting the second connecting segment, the first connecting portion, and the electrode lead-out member to form a second connecting portion.

In the foregoing solution, the second connecting segment, the first connecting portion, and the electrode lead-out member are connected to form the second connecting portion, which can not only constrain the second connecting segment, but also enable the tab and the electrode lead-out member to have a relatively high current flow capability.

For additional aspects and advantages of this application, some will be given in the following description, and some will become apparent in the following description or will be understood in the practice of this application.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a cross-sectional view of a battery cell according to some embodiments of this application;
FIG. 5 is a schematic diagram of positions of a second connecting segment and a first connecting segment according to some embodiments of this application;
FIG. 6 is a schematic diagram of positions of a second connecting segment and a first connecting segment according to some other embodiments of this application;
FIG. 7 is a schematic diagram of a second connecting segment constrained to a first connecting segment according to some embodiments of this application;
FIG. 8 is a schematic structural diagram of a tab according to some embodiments of this application;
FIG. 9 is a schematic diagram of a projection of a second connecting portion and a projection of a first connecting portion according to some embodiments of this application;
FIG. 10 is a schematic structural diagram of a height of a sub-tab according to some embodiments of this application;
FIG. 11 is a cross-sectional view of a battery cell according to some other embodiments of this application;
FIG. 12 is a schematic assembly diagram of two electrode assemblies and an electrode lead-out member according to some embodiments of this application; and
FIG. 13 is a schematic flowchart of a manufacturing method of battery cell according to some embodiments of this application.

The accompanying drawings are not drawn to scale.

Reference signs are described as follows: 100: battery; 10: box; 11: first sub-box; 12: second sub-box; 20: battery cell; 21: housing; 211: shell; 212: cover; 22: electrode assembly; 22a: first electrode assembly; 22b: second electrode assembly; 221: body; 2211: first end face; 222: tab; 2221: first connecting segment; 2222: second connecting segment; 2223: sub-tab; 2224: overlapping region; 2225: staggered region; 2226: first bending segment; 2227: root segment; 2228: second bending segment; 23: electrode lead-out member; 231: first portion; 2311: first surface; 2312: second surface; 24: first connecting portion; 241: first end; 242: second end; 25: second connecting portion; 26: electrode terminal; 200: controller; 300: motor; and 1000: vehicle.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions.

In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. A person of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, "a plurality of" means more than two (inclusive). Similarly, "a plurality of groups" means more than two (inclusive) groups, and "a plurality of pieces" means more than two (inclusive) pieces.

The battery mentioned in the embodiments of this application may include a single physical module that includes one or more battery cells for providing a higher voltage and capacity. When there are a plurality of battery cells, the plurality of battery cells are connected in series, in parallel, or in series and parallel through electrical connectors.

In some embodiments, the battery can be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage electric cabinet, and the like.

In the embodiments of this application, the battery cell may be a secondary battery, and the secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery. This is not limited in the embodiments of this application.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent short circuit of the positive electrode and negative electrode and to allow the active ions to pass through.

In some embodiments, the positive electrode may be a positive electrode plate, and the positive electrode plate may include a positive electrode current collector and a positive electrode active material arranged on at least one surface of the positive electrode current collector.

In an example, the positive electrode current collector includes two back-to-back surfaces in a thickness direction of the positive electrode current collector, and the positive electrode active material is arranged on either or both of the two back-to-back surfaces of the positive electrode current collector.

In an example, the positive electrode current collector may be a metal foil current collector or a composite current collector. For example, as the metal foil, the positive electrode current collector may use silver surface-treated aluminum or stainless steel, stainless steel, copper, aluminum, nickel, baked carbon, carbon, nickel, or titanium. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries.

In some embodiments, the negative electrode may be a negative electrode plate, and the negative electrode plate may include a negative electrode current collector.

In an example, the negative electrode current collector may be a metal foil current collector or a composite current collector. For example, as the metal foil, the negative electrode current collector may use silver surface-treated aluminum or stainless steel, stainless steel, copper, aluminum, nickel, baked carbon, carbon, nickel, or titanium.

In some embodiments, the negative electrode current collector includes two back-to-back surfaces in its thickness direction, and the negative electrode active material is disposed on either or both of the two back-to-back surfaces of the negative electrode current collector.

In an example, the negative electrode active material may be a negative electrode active material for batteries well-known in the art. In an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, and may alternatively use other conventional well-known materials that can be used as negative electrode active materials for batteries. One of these negative electrode active materials may be used alone, or two or more of them may be used in combination.

In some embodiments, the separator is an isolating film. The separator is not limited to any particular type in this application, and may be any well-known porous separator with good chemical stability and mechanical stability.

In an example, major materials of the isolating film may be selected from at least one of glass fiber, non-woven fabric, polyethylene, polypropylene, polyvinylidene fluoride, or ceramics. The separator may be a single-layer film or a multi-layer composite film, and is not particularly limited. When the separator is a multi-layer composite film, all layers may be made of same or different materials, which is not particularly limited. The isolating film may be an independent component located between the positive electrode and the negative electrode, or may be constrained to surfaces of the positive electrode and the negative electrode.

In some embodiments, the separator is a solid electrolyte. The solid electrolyte is arranged between the positive electrode and the negative electrode, and plays the roles of transporting ions and isolating the positive electrode and the negative electrode.

In some embodiments, the electrode assembly is a wound structure. The positive electrode plate and the negative electrode plate are wound into a wound structure.

In some embodiments, the electrode assembly is a laminated structure.

In some embodiments, the battery cell may include a housing. The housing is configured to encapsulate the electrode assembly, the electrolyte, and other components. The housing may be steel housing, aluminum housing, plastic housing (for example, polypropylene), composite metal housing (for example, copper-aluminum composite housing), aluminum-plastic film, or the like.

In some embodiments, the housing includes a cover and a shell, where the shell is provided with an opening, and the cover closes the opening to form a closed space for accommodating the electrode assembly and substances such as the electrolyte. The shell may be provided with one or more openings. One or more covers may be provided.

In some embodiments, at least one electrode terminal is provided on the housing, and the electrode terminal is electrically connected to a tab of the electrode assembly. The electrode terminal may be directly connected to the tab or indirectly connected to the tab through an adapter. The electrode terminal may be provided on the cover or may be provided on the shell.

In some embodiments, an explosion-proof valve is provided on the housing. The explosion-proof valve is configured to release the pressure inside the battery cell.

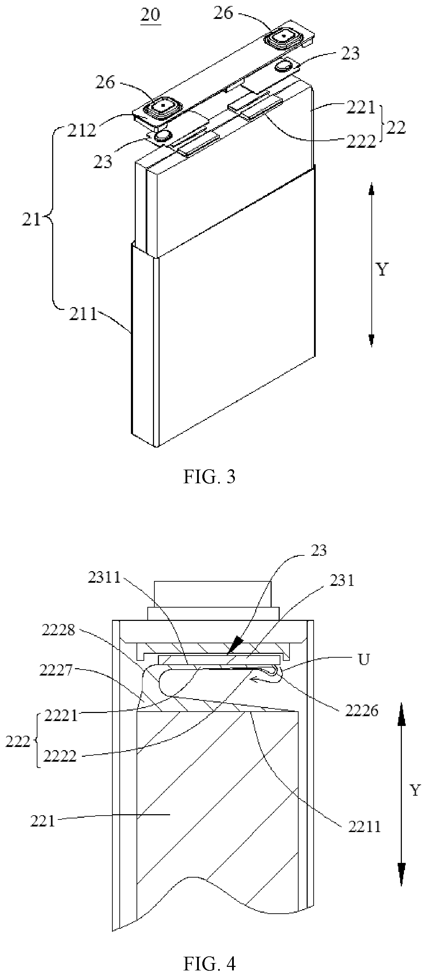

In an example, the battery cell may be a cylindrical battery cell, a prismatic battery cell, a pouch battery cell, or a battery cell of another shape. The prismatic battery cell includes a square shell battery cell, a blade battery cell, and a polygonal battery, such as a hexagonal battery. This is not particularly limited in the embodiments of this application. Referring to FIG. 3, the embodiments of this application use a square shell battery cell as an example.

For the development of battery technologies, many design factors need to be considered, for example, performance parameters such as energy density, discharge capacity, and charge and discharge rate, as well as assembly efficiency of the battery.

The electrode assembly includes a body and a tab. The tab extends from an end of the body. In the related art, to facilitate the connection between the tab and the electrode lead-out member, along an extension direction of the tab, the tab protrudes from the body in a relatively large size, to be specific, the tab has a relatively high height. After the tab is connected to the electrode assembly, the tab has a redundant portion. During the assembly process of battery cells, the redundant portion of the tab easily interferes with other components (for example, housing and body), affecting the assembly efficiency of the battery cell.

In view of this, to solve the problem of low assembly efficiency of the battery cell caused by the redundant portion of the tab, after in-depth research, the inventors have designed a technical solution, in which an end of the tab far away from the body is bent, thereby reducing the influence of the tab on the assembly of the battery cell and improving the assembly efficiency.

The battery disclosed in the embodiments of this application may be used without limitation in electric devices such as vehicles, ships, or aircrafts. The battery cell, battery, and the like disclosed in this application may be used to constitute a power supply system of that electric device.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle is used as an example for description of the following embodiments.

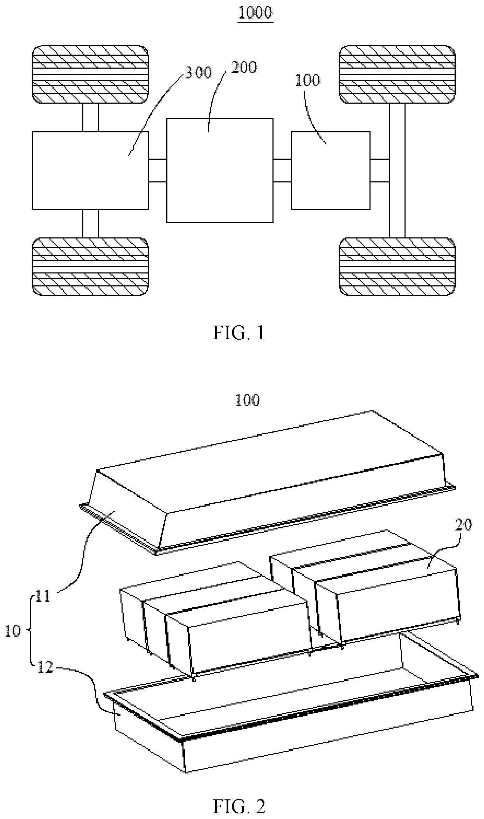

Referring to FIG. 1, FIG. 1 is a schematic structural diagram of a vehicle according to some embodiments of this application. The vehicle 1000 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first sub-box 11 and a second sub-box 12. The first sub-box 11 and the second sub-box 12 fit together to jointly define an accommodating space for accommodating the battery cell 20. The second sub-box 12 may be a hollow structure with an opening at one end, the first sub-box 11 may be a plate structure, and the first sub-box 11 covers an opening side of the second sub-box 12, such that the first sub-box 11 and the second sub-box 12 jointly define an accommodating space. The first sub-box 11 and the second sub-box 12 may both be a hollow structure with an opening on one side, and the opening side of the first sub-box 11 covers the opening side of the second sub-box 12.

In the battery 100, the battery cells 20 may be provided in plural, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Referring to FIG. 3, FIG. 3 is an exploded view of a battery cell according to some embodiments of this application. As shown in FIG. 3, the battery cell 20 includes a housing 21, an electrode assembly 22 and other function components. The housing 21 includes a shell 211 and a cover 212, where the shell 211 has an opening, and the cover 212 closes the opening to separate the internal environment of the battery cell 20 from the external environment.

The shell 211 is an assembly configured to cooperate with the cover 212 to form an internal environment of the battery cell 20, where the formed internal environment can be used to accommodate the electrode assembly 22, an electrolyte, and other components. The shell 211 and the cover 212 may be independent components. The shell 211 may be of various shapes and sizes. Specifically, a shape of the shell 211 may be determined according to a specific shape and size of the electrode assembly 22. The shell 211 may be made of various materials, such as copper, iron, aluminum, stainless steel, aluminum alloy, and plastic, which are not particularly limited in the embodiments of this application. The embodiments of this application are described using the shell 211 being a cuboid as an example.

The cover 212 refers to a component that covers the opening of the shell 211 to separate an internal environment of the battery cell 20 from an external environment. A shape of the cover 212 is not limited and may be adapted to a shape of the shell 211 to fit the shell 211. Optionally, the cover 212 may be made of a material (for example, aluminum alloy) with specified hardness and strength, such that the cover 212 is difficult to deform under extrusion and collision, allowing the battery cell 20 to have a higher structural strength and improved safety performance. The cover 212 may be provided with function components such as an electrode terminal 26. The electrode terminal 26 may be configured to be electrically connected to the electrode assembly 22 for outputting or inputting electric energy of the battery cell 20. The cover 212 may also be made of various materials, such as copper, iron, aluminum, stainless steel, aluminum alloy, and plastic. This is not particularly limited in the embodiments of this application. In some embodiments, an insulating structure may also be provided inside the cover 212, and the insulating structure may be configured to separate an electrical connection component in the shell 211 from the cover 212 so as to reduce the risk of short circuit. Illustratively, the insulating structure may be plastic, rubber, or the like.

Portions of the positive electrode plate and the negative electrode plate that contain active substances constitute a body 221 of the electrode assembly 22, while portions of the positive electrode plate and the negative electrode plate that contain no active substance separately constitute a tab 222. A positive electrode tab and a negative electrode tab may both be located at one end of the body or be located at two ends of the body respectively.

Referring to FIG. 4, FIG. 4 is an exploded view of a battery cell according to some embodiments of this application. According to some embodiments of this application, this application provides a battery cell 20, where the battery cell 20 includes an electrode assembly 22 and an electrode lead-out member 23. The electrode assembly 22 includes a body 221 and a tab 222. The electrode lead-out member 23 is configured to lead out electric energy of the electrode assembly 22, and the electrode lead-out member 23 includes a first portion 231. The tab 222 includes a first connecting segment 2221 and a second connecting segment 2222 that are connected in sequence. The first connecting segment 2221 is connected to the body 221, the second connecting segment 2222 is bent with respect to the first connecting segment 2221, and at least one of the first connecting segment 2221 and the second connecting segment 2222 is connected to the first portion 231.

The tab 222 extends from the body 221, and the second connecting segment 2222 is located at an end of the tab 222 far away from the body 221. Along the extension direction of the tab 222 or in an extending state of the tab 222, one end of the tab 222 connected to the body 221 may be the head end of the tab 222, one end of the tab 222 far away from the body 221 may be the tail end of the tab 222, and the second connecting segment 2222 may be located at the tail end with respect to the first connecting segment 2221.

In the figure, the direction indicated by letter U is the extension direction of the tab 222.

The first portion 231 is a portion of the electrode lead-out member 23 for connecting with the tab 222, and is electrically connected to the tab 222 through the first portion 231 to lead out the electric energy of the electrode assembly 22 to the electrode lead-out member 23.

The electrode lead-out member 23 is configured to lead out the electric energy of the electrode assembly 22 to the outside of the battery cell 20.

At least one of the first connecting segment 2221 and the second connecting segment 2222 is connected to the first portion 231, which may mean that the first connecting segment 2221 is connected to the first portion 231, or may mean that the second connecting segment 2222 is connected to the first portion 231, or may mean that both the first connecting segment 2221 and the second connecting segment 2222 are connected to the first portion 231.

The second connecting segment 2222 is bent with respect to the first connecting segment 2221, to be specific, the tail end of the tab 222 is bent with respect to the first connecting segment 2221.

In an example, referring to FIG. 4, the second connecting segment 2222 is bent 180 degrees with respect to the first connecting segment 2221.

According to the battery cell 20 of this embodiment of this application, the second connecting segment 2222 is bent with respect to the first connecting segment 2221, to be specific, the tail end of the tab 222 is bent, which can reduce the risk of interference between the tab 222 and other components (for example, the housing, the tab 222 of another electrode assembly 22), thereby reducing the influence of the tab 222 on the assembly of the electrode cells 20 and improving the assembly efficiency, and can also reduce the risk of short circuit between the positive and negative electrodes of the battery cell 20, thereby improving the reliability of the battery cell.

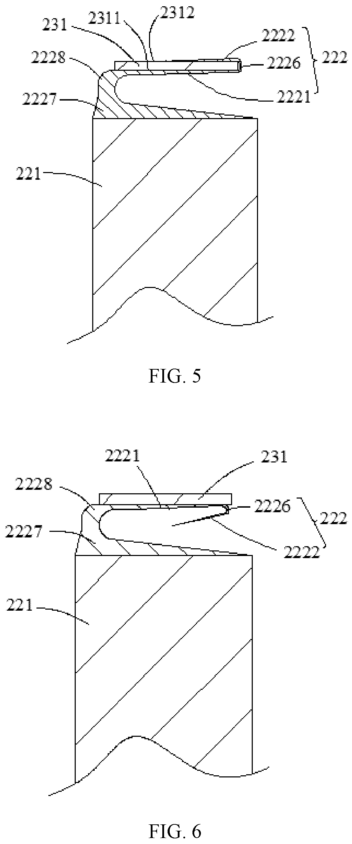

Referring to FIG. 5, FIG. 5 is a schematic diagram of positions of the second connecting segment and the first connecting segment according to some embodiments of this application. In some embodiments, the second connecting segment 2222 may be located on a side of the first portion 231 facing away from the first connecting segment 2221, to be specific, the second connecting segment 2222 may be bent with respect to the first connecting segment 2221 toward the side of the first portion 231 facing away from the first connecting segment 2221.

In this case, the second connecting segment 2222 may be constrained to the side of the first portion 231 facing away from the first connecting segment 2221. The second connecting segment 2222 may be connected to the first portion 231, or the second connecting segment 2222 and the first connecting segment 2221 may be connected to two opposite sides of the first portion 231, respectively. For example, as shown in FIG. 5, the first portion 231 may have a first surface 2311 facing the body 221 and a second surface 2312 facing away from the body 221, the second connecting segment 2222 may be connected to the second surface 2312, and the first connecting segment 2221 may be connected to the first surface 2311.

Referring to FIG. 6, FIG. 6 is a schematic diagram of positions of a second connecting segment and a first connecting segment according to some other embodiments of this application. According to some embodiments of this application, the first connecting segment 2221 is connected to the first portion 231, and the second connecting segment 2222 is located on a side of the first connecting segment 2221 facing away from the first portion 231.

The first connecting segment 2221 is connected to the first portion 231, and the electric energy of the electrode assembly 22 is transferred to the first portion 231 through the first connecting segment 2221 and led out through the electrode lead-out member 23.

The second connecting segment 2222 is bent toward the side of the first connecting segment 2221 facing away from the first portion 231, such that the second connecting segment 2222 is located on the side of the first connecting segment 2221 facing away from the first portion 231.

In the foregoing solution, the second connecting segment 2222 is located on the side of the first connecting segment 2221 facing away from the first portion 231, such that space on the side of the first connecting segment 2221 facing away from the first portion 231 can be reasonably utilized, so as to facilitate the assembly of the electrode lead-out member 23 and other components.

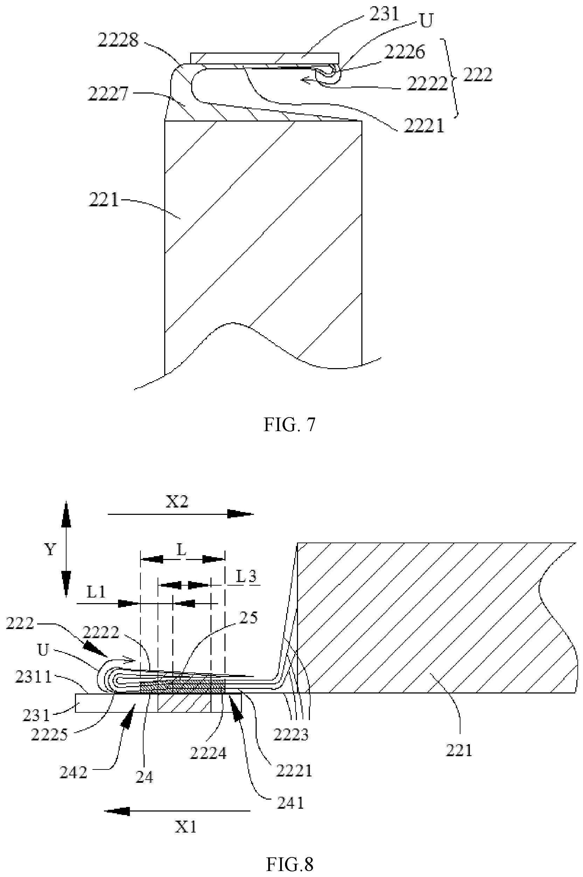

Referring to FIG. 7, FIG. 7 is a schematic diagram of a second connecting segment constrained to a first connecting segment according to some embodiments of this application. According to some embodiments of this application, the second connecting segment 2222 is constrained to a side of the first connecting segment 2221 facing away from the first portion 231.

The second connecting segment 2222 is constrained to the side of the first connecting segment 2221 facing away from the first portion 231, which may mean that the second connecting segment 2222 is constrained to the side of the first connecting segment 2221 facing away from the first portion 231 through a restraint member, for example, the restraint member can be an adhesive tape, the adhesive tape binds the second connecting segment 2222 to the side of the first connecting segment 2221 facing away from the first portion 231, or the restraint member may be a component arranged in the housing 21 of the battery cell 20, such as an insulating member or a bracket; or may mean that the second connecting segment 2222 may be welded to the first connecting segment 2221 to attach to the second connecting segment 2222.

The restrain member may constrain movement of the second connecting segment 2222 with respect to the electrode lead-out member 23.

In the foregoing solution, the second connecting segment 2222 is constrained to the side of the first connecting segment 2221 facing away from the first portion 231, which reduces the risk of interference between the second connecting segment 2222 and other components caused by the movement of the second connecting segment 2222, thereby reducing the influence of the second connecting segment 2222 on the assembly of the battery cell 20.

Referring to FIG. 7, according to some embodiments of this application, the second connecting segment 2222 is connected to the first connecting segment 2221. The second connecting segment 2222 is connected to the first connecting segment 2221, which may mean that the second connecting segment 2222 is welded to the first connecting segment 2221, or may mean that the second connecting segment 2222 is connected to the first connecting segment 2221 through a fixing member (for example, adhesive tape or conductive adhesive).

The restrain member and the fixing member can be the same components or may be different components.

The second connecting segment 2222 may be connected to the first portion 231 through the first connecting segment 2221, for example, the second connecting segment 2222, the first connecting segment 2221, and the first portion 231 are welded together.

In the foregoing solution, the second connecting segment 2222 is connected to the first connecting segment 2221, with no need to add an additional component to constrain the first connecting segment 2221, which facilitates the manufacturing and reduces costs. In some embodiments, the second connecting segment 2222 may be electrically connected to the first connecting segment 2221.

In the foregoing solution, the second connecting segment 2222 is connected to the first connecting segment 2221, which can not only constrain the second connecting segment 2222, but also enable the tab 222 and the electrode lead-out member 23 to have a relatively high current flow capability.

Referring to FIG. 5 and FIG. 7, according to some embodiments of this application, the first connecting segment 2221 and the second connecting segment 2222 are both electrically connected to the first portion 231.

The first connecting segment 2221 and the second connecting segment 2222 are both electrically connected to the first portion 231, which may mean that the first connecting segment 2221 and the second connecting segment 2222 are electrically connected to the two opposite sides of the first portion 231 respectively; or may mean that the second connecting segment 2222 is electrically connected to the first portion 231 through the first connecting segment 2221, for example, the second connecting segment 2222, the first connecting segment 2221, and the first portion 231 are stacked and welded together.

In the foregoing solution, both the first connecting segment 2221 and the second connecting segment 2222 are connected to the first portion 231, such that the tab 222 and the electrode lead-out member 23 have a higher current flow capability.

Referring to FIG. 5 and FIG. 7, according to some embodiments of this application, the first connecting segment 2221 and the second connecting segment 2222 are stacked.

The first portion 231 may have a first surface 2311 facing the body 221, and the first connecting segment 2221 and the second connecting segment 2222 may be stacked in a direction intersecting with the first surface 2311, or the first connecting segment 2221 and the second connecting segment 2222 may be stacked in a direction perpendicular to the first surface 2311, to be specific, the first portion 231, the first connecting segment 2221, and the second connecting segment 2222 may be stacked, for example, the second connecting segment 2222, the first connecting segment 2221, and the first portion 231 may be arranged in parallel.

In the foregoing solution, the first connecting segment 2221 and the second connecting segment 2222 are stacked, such that the assembly space is reasonably utilized and the space occupation is reduced.

Referring to FIG. 8, FIG. 8 is a schematic structural diagram of a tab according to some embodiments of this application. According to some embodiments of this application, the tab 222 includes a plurality of sub-tabs 2223 stacked, where the plurality of sub-tabs 2223 are connected to form a first connecting portion 24, and the first connecting portion 24 is located in the first connecting segment 2221.

The plurality of sub-tabs 2223 are stacked, and the plurality of sub-tabs 2223 are connected to form the first connecting portion 24, which is conducive to the bending of the second connecting segment 2222, and also conducive to reducing the damage of the tab 222 in the welding process of the tab 222 and the electrode lead-out member 23 and improving the current flow capability of the tab 222.

Referring to FIG. 8, according to some embodiments of this application, the tab 222 includes an overlapping region 2224 in which the plurality of sub-tabs 2223 overlap with each other and a staggered region 2225 in which ends of the plurality of sub-tabs 2223 are staggered, and the staggered region 2225 is connected to the body 221 through the overlapping region 2224, with one part of the first connecting portion 24 located in the overlapping region 2224, and the other part of the first connecting portion 24 located in the staggered region 2225.

The staggered region 2225 is connected to the body 221 through the overlapping region 2224, with one part of the first connecting portion 24 located in the overlapping region 2224, the other part of the first connecting portion 24 located in the staggered region 2225, and a second connecting end is located in the staggered region 2225.

The plurality of sub-tabs 2223 are compressed and connected to form the first connecting portion 24, such that one end of the plurality of sub-tabs 2223 far away from the body 221 forms the staggered region 2225, the part of the plurality of sub-tabs 2223 close to the body 221 forms the overlapping region 2224, and the staggered region 2225 is connected to the body 221 through the overlapping region 2224.

In the foregoing solution, one part of the first connecting portion 24 is located in the overlapping region 2224, and the other part of the first connecting portion 24 is located in the staggered region 2225, which enables the joint between the tab 222 and the electrode lead-out member 23 to have a relatively large current flow capability, and enables the tab 222 to have a shorter size along its extension direction, saving materials and manufacturing costs.

As shown in FIG. 8, in a finished battery cell 20, the electrode lead-out member 23 and the tab 222 are arranged in direction Y, and the body 221 and the tab 222 are arranged in direction X1. Alternatively, as shown in FIG. 7, when the battery cell 20 is assembled, the first connecting segment 2221 is bent with respect to the body 221, such that the electrode lead-out member 23 and the body 221 are arranged in direction Y, to be specific, a first end surface 2211 of the body 221 extending from the tab 222 faces the first portion 231.

Referring to FIG. 8, according to some embodiments of this application, the first connecting portion 24 includes a first end 241 connected to the body 221 and a second end 242 connected to the second connecting segment 2222, where along a direction from the first end 241 to the second end 242 (direction X1), a size of the first connecting portion 24 is L and a size of the part of the first connecting portion 24 located in the staggered region 2225 is L1, satisfying 0.2L≤L1≤0.5L.

Along the extension direction of the tab 222, the first end 241 is closer to the body 221, and the second end 242 is closer to the second connecting segment 2222. As shown in FIG. 8, the direction indicated by letter X1 in the figure may be the direction from the first end 241 to the second end 242.

Alternatively, the direction (direction X1) from the first end 241 to the second end 242 may be parallel to the first surface 2311.

Alternatively, L1 may be 0.2L, 0.3L, 0.4L, or 0.5L.

When the first connecting segment 2221 is connected to the first portion 231, the size of the part of the first connecting portion 24 located in the staggered region 2225 satisfies the foregoing range, which can not only enable the joint between the tab 222 and the electrode lead-out member 23 to have a relatively large current flow capability, but also enable the tab 222 to have a shorter size along its extension direction. If L1 is less than 0.2L, the tab 222 has a relatively long size along its extension direction, which leads to wastes in materials; and if L1 is greater than 0.5L, the part of the first connecting portion 24 in the staggered region 2225 has a relatively large size, which affects the current flow capability of the joint between the tab 222 and the electrode lead-out member 23.

According to some embodiments of this application, 0.3L≤L1≤0.4L.

Compared with 0.2L≤L1≤0.5L, when 0.3L≤L1≤0.4L, the joint between the tab 222 and the electrode lead-out member 23 can have a relatively large current flow capability, and the tab 222 can have a shorter size along its extension direction.

Alternatively, L1 may be 0.3L, 0.31L, 0.32L, 0.33L, 0.34L, 0.35L, 0.36L, 0.37L, 0.38L, 0.39L, or 0.4L.

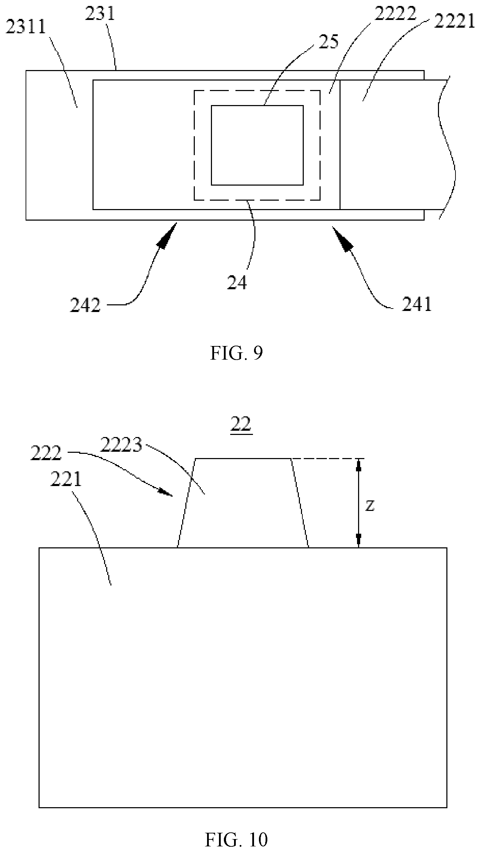

Referring to FIG. 4 and FIG. 8, and further referring to FIG. 9, FIG. 9 is a schematic diagram of a projection of a second connecting portion and a projection of a first connecting portion according to some embodiments of this application. According to some embodiments of this application, the first portion 231 has a first surface 2311 connected to the first connecting segment 2221; the second connecting segment 2222, the first connecting segment 2221, and the electrode lead-out member 23 are connected to form a second connecting portion 25; and along a direction perpendicular to the first surface 2311 (direction Y), a projection of the second connecting portion 25 at least partially overlaps with a projection of the first connecting portion 24.

The direction indicated by letter Y in the figure is perpendicular to the first surface 2311.

The first surface 2311 is a surface of the first portion 231 for connecting with the first connecting segment 2221. Alternatively, the first surface 2311 may be arranged facing the body 221.

The second connecting segment 2222 is connected to the first surface 2311 through the first connecting segment 2221 to form the second connecting portion 25.

In the direction perpendicular to the first surface 2311, the projection of the second connecting portion 25 and the projection of the first connecting portion 24 may partially overlap, or the projection of the second connecting portion 25 and the projection of the first connecting portion 24 may completely overlap.

The first connecting portion 24 connects a plurality of sub-tabs 2223, and the projection of the second connecting portion 25 at least partially overlaps the projection of the first connecting portion 24, so as to facilitate the welding of the second connecting segment 2222, the first connecting portion 24, and the electrode lead-out member 23.

If the second connecting portion 25 does not overlap with the first connecting portion 24, during welding of the second connecting segment 2222, the first connecting segment 2221, and the electrode lead-out member 23, some sub-tabs 2223 in the middle of the plurality of sub-tabs 2223 are easily damaged, which reduces the current flow capability at the joint between the tab 222 and the electrode lead-out member 23.

In the foregoing solution, the projection of the second connecting portion 25 at least partially overlaps with the projection of the first connecting portion 24, which facilitates the connection of the second connecting segment 2222, the first connecting segment 2221, and the electrode lead-out member 23, reduces the risk of breakage at a sub-tab 2223, and enables the joint between the tab 222 and the electrode lead-out member 23 to have a relatively high current flow capability.

Referring to FIG. 9, according to some embodiments of this application, along the direction perpendicular to the first surface 2311 (direction Y), the projection of the second connecting portion 25 falls into the projection of the first connecting portion 24.

In the direction perpendicular to the first surface 2311, the projection of the second connecting portion 25 falls into the projection of the first connecting portion 24, in other words, the projection of the second connecting portion 25 is less than or equal to the projection of the first connecting portion 24, such that the projection of the second connecting portion 25 fully overlaps with the projection of the first connecting portion 24.

The second connecting segment 2222 is located in the staggered region 2225, one part of the first connecting portion 24 is located in the overlapping region 2224, and the other part of the first connecting portion 24 is located in the staggered region 2225. In this way, after the second connecting segment 2222 is bent with respect to the first connecting segment 2221 toward the side facing away from the first portion 231 of the first connecting segment 2221, the second connecting segment 2222 is connected to the first connecting segment 2221, thicknesses of the second connecting segment 2222 and the first connecting segment 2221 are compensated in a stacking direction, such that a thickness difference between the second connecting segment 2222 and the first connecting segment 2221 after overlapping is relatively small.

It should be noted that a thickness of the joint of the second connecting segment 2222, the first connecting segment 2221, and the electrode lead-out member 23 mentioned in this embodiment of this application refers to sizes of the second connecting segment 2222, the first connecting segment 2221, and the electrode lead-out member 23 in the stacking direction.

In the foregoing solution, the projection of the second connecting portion 25 falls into the projection of the first connecting portion 24, which can effectively reduce the risk of cracks or fractures caused by direct welding of multiple layers of sub-tabs 2223.

Referring to FIG. 8, according to some embodiments of this application, the first connecting portion 24 includes the first end 241 connected to the body 221 and the second end 242 connected to the second connecting segment 2222, where along the direction from the first end 241 to the second end 242 (direction X1), the size of the first connecting portion 24 is L, the size of the part of the first connecting portion 24 located in the staggered region 2225 is L1, and a size of the second connecting portion 25 is L3, satisfying L1<L3<L.

The first end 241 and the second end 242 are two opposite ends of the first connecting portion 24 along the extension direction of the tab 222. The first end 241 is configured to connect the body 221 and the second end 242 is configured to connect the second connecting segment 2222.

Viewed from the direction perpendicular to the first surface 2311, along the direction from the first end 241 to the second end 242, the size L3 of the second connecting portion 25 is less than the size L of the first connecting portion 24, and the size L3 of the second connecting portion 25 is greater than the size L1 of the part of the first connecting portion 24 located in the staggered region 2225.

In the foregoing solution, the size of the second connecting portion 25 satisfies the foregoing range, and the second connecting portion 25 and the first connecting portion 24 have a relatively large overlapping area, which facilitates the connection of the second connecting segment 2222, the first connecting segment 2221, and the electrode lead-out member 23, and reduces the damage to the sub-tab 2223 during welding of the second connecting segment 2222, the first connecting segment 2221, and the electrode lead-out member 23.

According to some embodiments of this application, the first connecting portion 24 includes the first end 241 connected to the body 221 and the second end 242 connected to the second connecting segment 2222, where along the direction from the first end 241 to the second end 242 (direction X1), the midpoint of the second connecting portion 25 coincides with the midpoint of the first connecting portion 24.

Along the direction from the first end 241 to the second end 242, distances from the midpoint of the second connecting portion 25 to two ends of the second connecting portion 25 are equal, and distances from the midpoint of the first connecting portion 24 to two ends of the first connecting portion 24 are equal.

In the foregoing solution, the midpoint of the second connecting portion 25 coincides with the midpoint of the first connecting portion 24, which facilitates the connection of the second connecting segment 2222, the first connecting segment 2221, and the electrode lead-out member 23.

Referring to FIG. 8, according to some embodiments of this application, along the direction perpendicular to the first surface 2311 (direction Y), a projection of the second connecting segment 2222 covers the projection of the first connecting portion 24.

In the foregoing solution, the projection of the second connecting segment 2222 covers the projection of the first connecting portion 24, which facilitates the connection between the second connecting segment 2222 and the first connecting segment 2221.

Referring to FIG. 8, according to some embodiments of this application, along a direction from one end of the second connecting segment 2222 connected to the first connecting segment 2221 to a free end of the second connecting segment 2222, the second connecting segment 2222 exceeds beyond the second connecting portion 25.

The free end of the second connecting segment 2222 may be an end of the second connecting segment 2222 far away from the first connecting segment 2221. In the embodiment where the second connecting segment 2222 is located on the side of the first connecting segment 2221 facing away from the first portion 231 and the second connecting segment 2222 is connected to the first connecting segment 2221, along the direction from the second end 242 to the first end 241 (direction X2), one end of the second connecting segment 2222 is connected to the first connecting segment 2221, and the other end of the second connecting segment 2222 is the free end.

The second connecting segment 2222 extends beyond the second connecting portion 25, which means that an end of the second connecting segment 2222 far away from the first connecting segment 2221 extends beyond the second connecting portion 25 along the direction from the second end 242 to the first end 241.

The tab 222 may further include a first bending segment 2226, where the first connecting segment 2221 and the second connecting segment 2222 are connected through the first bending segment 2226, and the end of the second connecting segment 2222 far away from the first connecting segment 2221 may be an end of the second connecting segment 2222 far away from the first bending segment 2226.

In the foregoing solution, the second connecting segment 2222 exceeds beyond the second connecting portion 25, which can better fix the second connecting segment 2222.

According to some embodiments of this application, the first connecting portion 24 and/or the second connecting portion 25 is formed through ultrasonic welding.

In the foregoing solution, the first connecting portion 24 and/or the second connecting portion 25 is formed through ultrasonic welding, such that the respective connecting portions are firmly connected.

According to some embodiments of this application, the battery cell 20 further includes an electrode terminal 26, and the electrode lead-out member 23 is an adapter connecting the tab 222 and the electrode terminal 26, or the electrode lead-out member 23 is the electrode terminal 26.

In the foregoing solution, the electrode lead-out member 23 being an adapter connecting the tab 222 and the electrode terminal 26 is convenient to transfer the electric energy of the electrode assembly 22 to the electrode terminal 26; and the electrode lead-out member 23 being the electrode terminal 26 has a simple structure, which is convenient to lead out the electric energy of the electrode assembly 22.

When the electrode lead-out member 23 is an adapter, the electrode lead-out member 23 further includes a second portion (not shown in the figure), where the second portion is configured to connect the electrode terminal 26. The second portion may be bent with respect to the first portion 231 so as to facilitate connection with the electrode terminal 26.

According to some embodiments of this application, the electrode assembly 22 is a laminated structure.

The electrode assembly 22 has a laminated structure, in which a positive electrode plate, a separator, and a negative electrode plate are stacked.

In the foregoing solution, when the electrode plate is detected in the lamination process, if one or more electrode plates are defective, they can be rejected and scrapped with low scrapping cost.

According to some embodiments of this application, the tab 222 includes a plurality of sub-tabs 2223 stacked, where heights of the plurality of sub-tabs 2223 are equal.

Referring to FIG. 10, FIG. 10 is a schematic diagram of a height of a sub-tab according to some embodiments of this application. In the figure, the size indicated by letter Z is a height of a sub-tab 2223.

In the foregoing solution, when the height of the sub-tab 2223 is a size that the sub-tab 2223 protrudes from the body 221 along the extension direction of the tab 222 when the tab 222 is in an extending (unbent) state, and the heights of the plurality of sub-tabs 2223 are equal, which is convenient for processing and manufacturing.

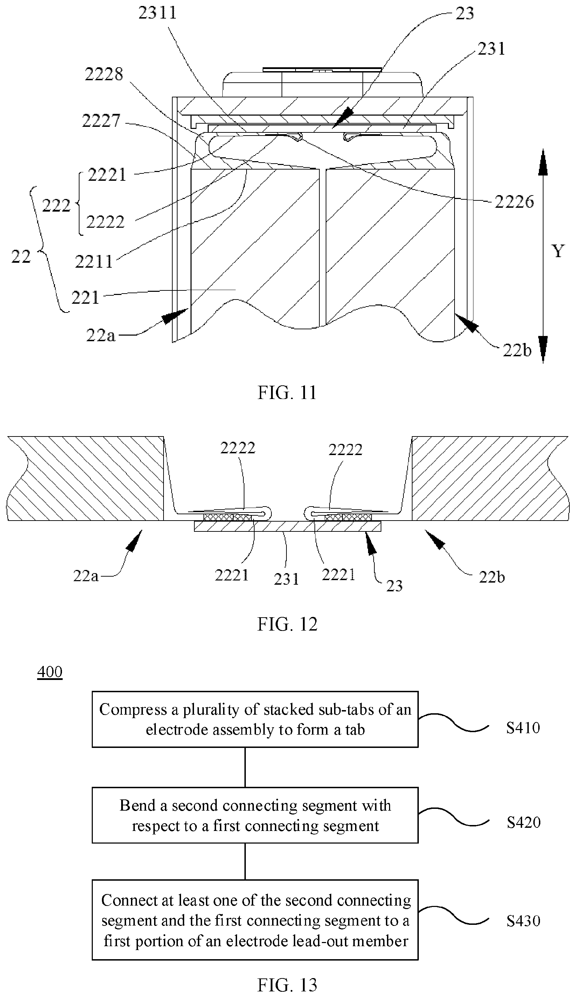

Referring to FIG. 4 and FIG. 11, according to some embodiments of this application, the tab 222 extends from a first end face 2211 of the body 221, where the first end face 2211 faces the first portion 231; and the tab 222 further includes a root segment 2227, where the root segment 2227 connects the first connecting segment 2221 and the body 221, and the first connecting segment 2221 is bent with respect to the root segment 2227.

The first end surface 2211 is a surface of the body 221 close to the first portion 231, and the tab 222 extends from the first end surface 2211.

The tab 222 may further include a second bending segment 2228, where the second bending segment 2228 connects the root segment 2227 and the first connecting segment 2221.

The first connecting segment 2221 may be connected to the first portion 231, the second connecting segment 2222 may be located on the side of the first connecting segment 2221 far away from the first portion 231, and the second connecting segment 2222, the first connecting segment 2221, and the electrode lead-out member 23 are connected.

In the foregoing solution, the first connecting segment 2221 is connected to the body 221 through the root segment 2227, and the first connecting segment 2221 is bent with respect to the root segment 2227, which can reasonably utilize the assembly space and increase the energy density of the battery cell 20.

Referring to FIG. 11 and FIG. 12, FIG. 11 is a cross-segmental view of a battery cell according to some other embodiments of this application, and FIG. 12 is a schematic assembly diagram of two electrode assemblies and an electrode lead-out member according to some embodiments of this application. According to some embodiments of this application, the electrode assembly 22 includes a first electrode assembly 22a and a second electrode assembly 22b, where the first electrode assembly 22a and the second electrode assembly 22b each are provided with the tab 222, the tab 222 of the first electrode assembly 22a and the tab 222 of the second electrode assembly 22b are connected to one electrode lead-out member 23, and the second connecting segment 2222 of the tab 222 of the first electrode assembly 22a and the second connecting segment 2222 of the tab 222 of the second electrode assembly 22b extend in opposite directions.

The first connecting segment 2221 of the tab 222 of the first electrode assembly 22a and the first connecting segment 2221 of the tab 222 of the second electrode assembly 22b are connected to the first portion 231 of one electrode assembly 22, and the second connecting segment 2222 of the tab 222 of the first electrode assembly 22a and the second connecting segment 2222 of the tab 222 of the second electrode assembly 22b extend in opposite directions, which lowers the risk of mutual interference between the tab 222 of the first electrode assembly 22a and tab 222 of the second electrode assembly 22b.

In the foregoing solution, the tab 222 of the first electrode assembly 22a and the tab 222 of the second electrode assembly 22b are connected to one electrode lead-out member 23, which facilitates the transfer of current from the battery cell 20.

According to some embodiments of this application, an embodiment of this application further provides a battery 100, where the battery 100 includes the battery cell 20 according to any one of the foregoing embodiments.

According to some embodiments of this application, an embodiment of this application further provides an electric device, where the electric device includes the battery cell 20 according to any one of the foregoing embodiments or the battery 100 according to any one of the foregoing embodiments, and the battery cell 20 or the battery 100 is configured to supply electric energy.

The electric device may be any one of the foregoing devices or systems using the battery 100.

The battery cell 20, the battery 100, and the electric device of the embodiments of this application have been described above, and the manufacturing method of battery cell of the embodiments of this application will be described below, where any part not described in detail can be referred to the foregoing embodiments.

FIG. 13 is a schematic flowchart of a manufacturing method of battery cell according to some embodiments of this application. According to some embodiments of this application, as shown in FIG. 13, this application further provides a manufacturing method 400 of battery cell, where the manufacturing method 400 of battery cell includes the following steps.

S410: A plurality of stacked sub-tabs 2223 of an electrode assembly 22 are compressed to form a tab 222, where the tab 222 includes a first connecting segment 2221 and a second connecting segment 2222 that are connected in sequence, and the first connecting segment 2221 is connected to the body 221 of the electrode assembly 22.

S420: The second connecting segment 2222 is bent with respect to the first connecting segment 2221.

S430: At least one of the second connecting segment 2222 and the first connecting segment 2221 is connected to a first portion 231 of an electrode lead-out member 23.

The tab 222 is bent to form the first connecting segment 2221 and a second connecting segment 2222, such that the second connecting segment 2222 is bent with respect to the first connecting segment 2221.

According to the manufacturing method 400 of battery cell, the second connecting segment 2222 is bent with respect to the first connecting segment 2221, which can reduce the risk of interference between the tab 222 and other components, facilitate the assembly of the battery cell 20, improve the assembly efficiency, and reduce the risk of short circuit caused by contact between the positive and negative electrodes of the battery cell 20. The battery cell 20 manufactured by the manufacturing method has relatively high reliability.

According to some embodiments of this application, the compressing a plurality of sub-tabs 2223 stacked of an electrode assembly 22 includes: connecting the plurality of sub-tabs 2223 to form a first connecting portion 24; and the bending the second connecting segment 2222 with respect to the first connecting segment 2221 includes: bending the tab 222 at an end of the first connecting portion 24 far away from the body 221 to form the second connecting segment 2222.

In the foregoing solution, the plurality of sub-tabs 2223 are connected to form the first connecting portion 24, such that the plurality of sub-tabs 2223 has a compact structure, which helps to gather the electric energy of the plurality of sub-tabs 2223; and the tab 222 is bent at the end of the first connecting portion 24 far away from the body 221, which helps to bend the tab 222.

According to some embodiments of this application, the connecting at least one of the second connecting segment 2222 and the first connecting segment 2221 to a first portion 231 of an electrode lead-out member 23 includes: connecting the second connecting segment 2222, the first connecting portion 24, and the electrode lead-out member 23 to form a second connecting portion 25.

In the foregoing solution, the second connecting segment 2222, the first connecting portion 24, and the electrode lead-out member 23 are connected to form the second connecting portion 25, which can not only constrain the second connecting segment 2222, but also enable the tab 222 and the electrode lead-out member 23 to have a relatively high current flow capability.

According to some embodiments of this application, referring to FIG. 3 to FIG. 13, an embodiment of this application provides a battery cell 20, where the battery cell 20 includes a housing 21, an electrode assembly 22, an electrode terminal 26, and an electrode lead-out member 23. The housing 21 includes a shell 211 and a cover 212. The shell 211 has an opening, and the cover 212 closes the opening to form an accommodating space. The electrode assembly 22 is arranged in the accommodating space, and the electrode assembly 22 has a laminated structure. The electrode assembly 22 includes a body 221 and a tab 222 extending from the body 221. The tab 222 includes a plurality of sub-tabs 2223, where the plurality of sub-tabs 2223 are stacked and connected to form a first connecting portion 24. The tab 222 includes an overlapping region 2224 in which the plurality of sub-tabs 2223 overlap with each other and a staggered region 2225 in which ends of the plurality of sub-tabs 2223 are staggered, where the staggered region 2225 is connected to the body 221 through the overlapping region 2224, with one part of the first connecting portion 24 located in the overlapping region 2224, and the other part of the first connecting portion 24 located in the staggered region 2225. The tab 222 includes a root segment 2227, a second bending segment 2228, a first connecting segment 2221, a first bending segment 2226, and a second connecting segment 2222 that are connected in sequence, where the root segment 2227 is connected to the body 221, the first connecting segment 2221 is bent with respect to the root segment 2227, the second connecting segment 2222 is bent with respect to the first connecting segment 2221, the second connecting segment 2222 is located on a side of the first connecting segment 2221 far away from the first portion 231, and the second connecting segment 2222, the first connecting segment 2221, and the first portion 231 of the electrode lead-out member 23 are connected to form a second connecting portion 25. The first portion 231 has a first surface 2311 facing the body 221, and along a direction perpendicular to the first surface 2311, a projection of the second connecting portion 25 falls into a projection of the first connecting portion 24. The electrode terminal 26 is arranged on the cover 212, and the electrode lead-out member 23 connects the tab 222 and the electrode terminal 26.

According to the battery cell 20 of this embodiment of this application, the second connecting segment 2222 is bent with respect to the first connecting segment 2221, and the second connecting segment 2222 is connected to the side of the first connecting segment 2221 far away from the first portion 231, which reduces the risk of interference between the tab 222 and other components, and reduces the risk of short circuit between the positive and negative electrodes of the battery cell 20, such that the battery cell 20 has relatively high safety.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
an electrode assembly comprising a body and a tab; and
an electrode lead-out member for leading out electric energy of the electrode assembly, the electrode lead-out member comprising a first portion,
wherein the tab comprises a first connecting segment and a second connecting segment that are connected in sequence, the first connecting segment is connected to the body, the second connecting segment is bent with respect to the first connecting segment, and at least one of the first connecting segment and the second connecting segment is connected to the first portion.

2. The battery cell according to claim 1, wherein the first connecting segment is connected to the first portion, and the second connecting segment is located on a side of the first connecting segment facing away from the first portion.

3. The battery cell according to claim 1 or 2, wherein the second connecting segment is constrained to a side of the first connecting segment facing away from the first portion.

4. The battery cell according to claim 3, wherein the second connecting segment is connected to the first connecting segment.

5. The battery cell according to any one of claims 1 to 4, wherein both the first connecting segment and the second connecting segment are electrically connected to the first portion.

6. The battery cell according to any one of claims 1 to 5, wherein the first connecting segment and the second connecting segment are stacked.

7. The battery cell according to any one of claims 1 to 6, wherein the tab comprises a plurality of sub-tabs stacked, the plurality of sub-tabs are connected to form a first connecting portion, and the first connecting portion is located in the first connecting segment.

8. The battery cell according to claim 7, wherein the tab comprises an overlapping region in which the plurality of sub-tabs overlap with each other and a staggered region in which ends of the plurality of sub-tabs are staggered, and the staggered region is connected to the body through the overlapping region, with one part of the first connecting portion located in the overlapping region, and the other part of the first connecting portion located in the staggered region.

9. The battery cell according to claim 8, wherein the first connecting portion comprises a first end connected to the body and a second end connected to the second connecting segment, and along a direction from the first end to the second end, a size of the first connecting portion is L and a size of the part of the first connecting portion located in the staggered region is L1, satisfying 0.2L≤L1≤0.5L.

10. The battery cell according to any one of claims 7 to 9, wherein the first portion has a first surface connected to the first connecting segment; and
the second connecting segment, the first connecting segment, and the electrode lead-out member are connected to form a second connecting portion, and along a direction perpendicular to the first surface, a projection of the second connecting portion at least partially overlaps with a projection of the first connecting portion.

11. The battery cell according to claim 10, wherein along the direction perpendicular to the first surface, the projection of the second connecting portion falls into the projection of the first connecting portion.

12. The battery cell according to claim 10 or 11, wherein the first connecting portion comprises the first end connected to the body and the second end connected to the second connecting segment, and along the direction from the first end to the second end, the size of the first connecting portion is L, the size of the part of the first connecting portion located in the staggered region is L1, and a size of the second connecting portion is L3, satisfying L1<L3<L.

13. The battery cell according to any one of claims 10 to 12, wherein the first connecting portion comprises the first end connected to the body and the second end connected to the second connecting segment, and along the direction from the first end to the second end, a midpoint of the second connecting portion coincides with a midpoint of the first connecting portion.

14. The battery cell according to any one of claims 10 to 13, wherein along a direction from one end of the second connecting segment connected to the first connecting segment to a free end of the second connecting segment, the second connecting segment extends beyond the second connecting portion.

15. The battery cell according to any one of claims 10 to 14, wherein along the direction perpendicular to the first surface, a projection of the second connecting segment covers the projection of the first connecting portion.

16. The battery cell according to any one of claims 10 to 15, wherein the first connecting portion and/or the second connecting portion is formed through ultrasonic welding.

17. The battery cell according to any one of claims 1 to 16, wherein the battery cell further comprises an electrode terminal, and the electrode lead-out member is an adapter connecting the tab and the electrode terminal, or the electrode lead-out member is the electrode terminal.

18. The battery cell according to any one of claims 1 to 17, wherein the electrode assembly is a laminated structure.

19. The battery cell according to any one of claims 1 to 18, wherein the tab comprises a plurality of sub-tabs stacked, and heights of the plurality of sub-tabs are equal.

20. The battery cell according to any one of claims 1 to 19, wherein the tab extends from a first end face of the body, the first end face facing the first portion, and the tab further comprises a root segment, the root segment connecting the first connecting segment and the body, and the first connecting segment being bent with respect to the root segment.

21. The battery cell according to any one of claims 2 to 20, wherein the electrode assembly comprises a first electrode assembly and a second electrode assembly, the first electrode assembly and the second electrode assembly each are provided with the tab, the tab of the first electrode assembly and the tab of the second electrode assembly are connected to one electrode lead-out member, and the second connecting segment of the tab of the first electrode assembly and the second connecting segment of the tab of the second electrode assembly extend in opposite directions.

22. A battery, comprising the battery cell according to any one of claims 1 to 21.

23. An electric device, comprising the battery cell according to any one of claims 1 to 21 or the battery according to claim 22, wherein the battery cell or the battery is configured to supply electric energy.

24. A method for manufacturing a battery cell, comprising:
compressing a plurality of stacked sub-tabs of an electrode assembly to form a tab, wherein the tab comprises a first connecting segment and a second connecting segment that are connected in sequence, and the first connecting segment is connected to a body of the electrode assembly;
bending the second connecting segment with respect to the first connecting segment; and
connecting at least one of the second connecting segment and the first connecting segment to a first portion of an electrode lead-out member.

25. The method for manufacturing a battery cell according to claim 24, wherein said compressing a plurality of stacked sub-tabs of an electrode assembly comprises:
connecting the plurality of sub-tabs to form a first connecting portion, and
said bending the second connecting segment with respect to the first connecting segment comprises:
bending the tab at an end of the first connecting portion far away from the body to form a second connecting segment.

26. The method for manufacturing a battery cell according to claim 25, wherein said connecting at least one of the second connecting segment and the first connecting segment to a first portion of an electrode lead-out member comprises:
connecting the second connecting segment, the first connecting portion, and the electrode lead-out member to form a second connecting portion.
